# EUROPÄISCHE PATENTANMELDUNG

(11) **EP 1 098 496 A2**
(43) Veröffentlichungstag der Anmeldung: **09.05.2001**
(21) Anmeldenummer: 00122800.6
(22) Anmeldetag: 19.10.2000
(51) Int. Cl.: H04L 29/12

(54) **Umgekehrte Maskierung fuer die Zugreifbarkeit auf Datenendstationen in privaten IPv4-Netzen**

(30) Priorität: 02.11.1999 DE 19952669
(71) Anmelder: SIEMENS AKTIENGESELLSCHAFT, 80333 München (DE)
(72) Erfinder: Engmann, Steffen, 80333 München (DE)

(57) **Zusammenfassung**

Die Erfindung bezieht sich auf ein Verfahren zum Verbinden von Hosts (CH, MH) eines ersten und eines zweiten paketorientierten Kommunikationsnetzes, wobei die Kommunikationsnetze über zumindest eine Schnittstelle (AR) miteinander verbunden sind.

Zweck ist das Ermöglichen eines direkten Zugriffs eines externen Host (CH) des ersten Kommunikationsnetzes auf einen internen Host (PH; MH) mit nicht öffentlicher interner Adresse des zweiten, privaten Kommunikationsnetzes.

Dazu wird insbesondere vorgeschlagen, daß ein verbindungssuchender Host (CH) des ersten Kommunikationsnetzes bei einem Namensserver (NS) nach einer Zugangs-Knoten-Adresse des privaten Netzes fragt, woraufhin der Namensserver diesem Zugangs-Knoten (AR) die Adresse des externen Host und des angeforderten internen Host (MH) zum dortigen Zwischenspeichern mitteilt. Beim späteren Eintreffen einer Nachricht des externen Hast (CH) beim Zugangs-Knoten (AR) tauscht dieser vor dem Weiterleiten seine Zieladresse gegen die interne Adresse des internen Host (MH) aus.

## Beschreibung

Die Erfindung bezieht sich auf Verfahren zum Verbinden von Einrichtungen verschiedener Netze, insbesondere zum Verbinden von Datenendstationen (nachfolgend 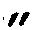 Hosts" genannt) eines Netzes gemäß den oberbegrifflichen Merkmalen des Patentanspruchs 1 bzw. ein Kommunikationssystem zum Durchführen des Verfahrens.

Aufgrund des Fehlens von IPv4-Adressen (IPv4: Internet-Protokollversion 4) verwenden einige Sub-Netze eine private Adressierung für deren Hosts. Insbesondere bei zellularen Netzen wird eine private Adressierung sehr wichtig, da es Millionen von Datenendstationen gibt, die über IPv4-Adressen zu adressieren sind. Private IPv4-Adressen müssen und können nicht außerhalb des privaten Netzes erscheinen und werden daher durch die öffentliche IPv4-Adresse des Zugangs-Knotens des privaten Netzes dargestellt, falls eine Verbindung mit Hosts außerhalb des privaten Netzes einzurichten ist. Normalerweise ist es nicht möglich, diese Hosts von außerhalb des privaten Netzes aus zu verbinden, und zwar auf Grund von deren nicht-öffentlicher Adresse.

Beim Internet, bei dem das sogenannte Internet-Protokoll (IP) zur Steuerung der Datenkommunikation zwischen verschiedenen Datenendgeräten verwendet wird, werden Informationen in sogenannte 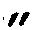 Datagramme" unterteilt. Jedes Datagramm wird dann mit einem Kopf ausgestattet, der dessen Quell- und Zieladressen enthält. Aufgrund dieser Adreßinformation werden die Daten durch das paketorientierte Netz, insbesondere Internet, zum Ziel geführt. Das Internet-Protokoll ist standardisiert und wird derzeit in der sogenannten Internetprotkollversion 4 (IPv4) verwendet.

Die dabei verwendeten IPv4-Adressen bestehen aus 32 Bit, die in Gruppen aus vier sogenannten Oktetts organisiert sind. Üblicherweise werden sie als Dezimalzahlen dargestellt, wobei jedes Oktett zu einer ein- bis dreistelligen Dezimalzahl umgewandelt wird, wobei diese durch jeweils einen Punkt getrennt sind. Übliche Beispiele dafür sind: 192.16.3.3,199.99.125.16 oder 38.2.131.1.

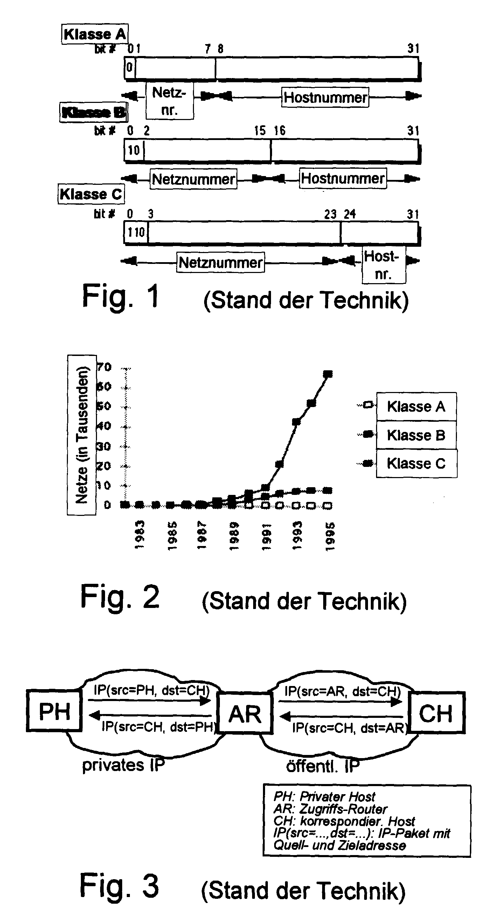

Die Adressen sind in Adreßklassen organisiert, die Netz- und Host-Teile trennen. Um die Flexibilität zu bieten, die zur Unterstützung verschieden großer Netze erforderlich ist, wurde der IP-Adreßraum in drei verschiedene Adreßklassen eingeteilt, nämlich Klasse A, Klasse B und Klasse C. Jede Klasse legt den Randbereich zwischen dem Netzpräfix und der Host-Nummer bei einem bestimmten Punkt innerhalb der 32-Bit-Adresse fest. Die Formate der grundlegenden Adreßklassen sind in Fig. 1 verdeutlicht.

Aufgrund dieser Unterteilung in Netz-Klassen werden nicht alle 2³² (=4.294.967.296) IPv4-Adressen verwendet, da die Adressen nicht in jedem Netz effizient belegt werden. Jedoch ist beim derzeit starken Wachstum des Internets zu erwarten, daß die Anzahl der verfügbaren IPv4-Adressen in absehbarer Zeit nicht mehr ausreichen könnte. Fig.2 zeigt eine Abbildung der belegten Netznummern der verschiedenen Klassen. Bislang wurde eine Vielzahl verschiedener Vorschläge gemacht, den Mangel von IPv4-Adressen zu beseitigen, z.B. klassenloses Inter-Domain-Routing, dynamisches IP-Adressieren, die Verwendung eines privaten Adreßraums oder der Entwurf eines vollständig neuen Internet-Protokolls (IPv6). Nachfolgend wird die Verwendung von einem privatem Adreßraum weiter erörtert.

Die Organisation zur Zuweisung von Internetadressen bzw. Internet-Nummern (IANA: Internet Assigned Numbers Authority) hat einen bestimmten IP-Adreßraum für private Anwendungen reserviert. Jede Firma oder private Organisation kann Adressen aus diesen Adreßräumen für deren Anwendungen verwenden, ohne dies irgendeiner Organisation oder Autorität anzuzeigen. Jedoch sind private Adressen für die Verwendung innerhalb privater Netze streng begrenzt und dürfen außerdem außerhalb der privaten Netze nicht erscheinen. Derzeit sind die folgenden drei Blöcke des IP-Adreßraums für private Netze belegt: 10.0.0.0-10.255.255.255,172.16.0.0-172.31.255.255 und 192.168.0.0-192.168.255.255. Der erste Block ist eine einzelne Netznummer der Klasse A, der zweite Block ist ein Satz aus sechzehn folgenden Netznummern der Klasse B und der dritte Block ist ein Satz aus 256 folgenden Netznummern der Klasse C.

Da diese Adressen stets nur innerhalb privater Netze verbleiben, können sie in irgendwelchen privaten Netzen über das gesamte Internet hinweg mehrfach verwendet werden. Daher kann eine viel größere Anzahl von Hosts innerhalb deren privater Netze über IP kommunizieren, als öffentliche IPv4-Adressen entsprechend dem Adreßraum zugewiesen werden können.

Bei der Verwendung privater Netze findet eine IP-Maskierung statt. Private Netze können mit öffentlichen IP-Netzen, wie dem Internet, über einen Zugangs-Knoten verbunden werden, der dann eine öffentliche Adresse des offiziellen IPv4-Adreßraums erhalten muß.

Falls ein privater Host PH, wie dies in Fig.3 skizziert ist, IP-Pakete zu einem kommunizierenden externen Host CH außerhalb des privaten Netzes versenden möchte, ändert der Zugangs-Knoten AR eines solchen Netzes die Quelladresse src der IP-Pakete von der privaten Adresse des privaten Hosts PH zu seiner eigenen öffentlichen IP-Adresse. Der korrespondierende Host CH kann dann auf die hereinkommenden IP-Pakete antworten und Antwortpakete zur Zieladresse dst des Zugangs-Knotens AR als der Zugangs-Knoten-Adresse zurücksenden, da diese in das Quelladreßfeld src hereinkommender Pakete geschrieben ist. Der Zugangs-Knoten AR weiß, daß der private Host PH mit dem korrespondierenden externen Host CH kommuniziert und modifiziert daher die IP-Pakete, die von dem korrespondierenden Host CH hereinkommen, ändert die Zieladresse dst von seiner eigenen zu der des privaten Hosts PH und liefert diese zum privaten Host PH. Dieser Mechanismus wird als IP-Maskierung bezeichnet und funktioniert bei Verbindungen, die durch einen Host PH innerhalb eines privaten Netzes nach außen hin eingerichtet werden.

Die IP-Maskierung funktioniert jedoch lediglich bei Verbindungen, die durch Hosts PH eingeleitet werden, die innerhalb eines privaten Netzes sitzen. Damit können externe korrespondierende Hosts CH mit öffentlichen IP-Adressen, die irgendwo in einem öffentlichen IP-Netz wie dem Internet sitzen, nicht mit irgendeinem Host PH innerhalb eines privaten Netzes verbunden werden, da die privaten Hosts PH keine gültige öffentliche IP-Adresse haben. Selbst wenn der korrespondierende Host CH seine IP-Pakete zu dem Zugangs-Knoten AR des privaten Netzes hin adressiert, in dem der private Host PH sitzt, würden diese nicht direkt zu dem privaten Host PH geliefert, da der Zugangs-Knoten AR nicht wüßte, zu welchem der privaten Hosts PH, für die er verantwortlich ist, er die gelieferten IP-Pakete weiterzuleiten hätte.

Die Aufgabe der Erfindung besteht darin, die Zugriffe zwischen korrespondierenden externen Hosts auf irgendeinen Host innerhalb eines privaten Netzes zu ermöglichen, insbesondere eine Verbesserung des Zugangs-Knotens und einer weiteren IP-Netzeinheit zum Bereitstellen eines Mechanismus vorzuschlagen, der korrespondierende externe Hosts mit irgendeinem Host innerhalb eines privaten Netzes verbindet.

Diese Aufgabe wird durch ein Verfahren zum Verbinden von Einrichtungen verschiedener Netze mit den Merkmalen des Patentanspruchs 1 bzw. ein Kommunikationssystem mit den Merkmalen des Anspruchs 18 gelöst.

Durch dieses Verfahren bzw. das Kommunikationssystem kann ein Host eine direkte Verbindung mit einem anderen Host aufbauen, der sich innerhalb eines anderen, insbesondere privaten Netzes befindet.

Vorteilhafte Ausgestaltungen sind Gegenstand von abhängigen Ansprüchen.

Vorzugsweise ist die Schnittstelle ein Zugangs-Knoten des zweiten Kommunikationsnetzes, über den der interne Host angefordert wird. Der Zugangs-Knoten ist vorteilhafterweise mit einer Tabelle zum zugeordneten Eintragen der Adresse des verbindungssuchenden externen Hosts des ersten Kommunikationsnetzes und der von diesem gerufenen internen Adresse des internen Hosts des zweiten Kommunikationsnetzes ausgestattet. Insbesondere durch den zuständigen Namensserver können diese beiden Adressen beim Zugangs-Knoten angemeldet werden und vorzugsweise nur zeitweilig abgespeichert werden.

Zur Vermeidung von Fehlverbindungen oder über eine längere Zeit nicht genutzten Einträgen in der Tabelle kann die Anmeldung der Verbindung und damit der Adressen durch den Namensserver bis zu einer Bestätigung durch den Zugangs-Knoten wiederholt bzw. nach einer voreinstellbaren Zeit ohne Aktivitäten zwischen den Einrichtungen dort wieder gelöscht werden.

Der Zugangs-Knoten tauscht beim Eintreffen eines Datenpakets vom externen Host seine Zieladresse gegen die Zieladresse des internen Host aus, wie dies in ähnlicher Art und Weise beim für sich bekannten Aufbau einer Verbindung vom internen Host an einen externen Host mit öffentlicher Adresse geschieht. Dadurch ist das Verfahren entfernt mit einem umgekehrten Maskierungsverfahren vergleichbar. Das Zurücksenden einer Bestätigung nach dem Eintreffen eines Datenpakets vom externen Host beim internen Host kann vorzugsweise in bekannter Art und Weise erfolgen.

Das Anfragen des externen Hosts bei einem Namensserver vor dem Verbindungsaufbau nach der Adresse eines privaten Hosts im zweiten Kommunikationsnetz ermöglicht dem Namensserver, vorbereitende Informationen an den Zugangs-Knoten zu senden. In dem Namensserver ist dazu zu dem bekannten Namen des angefragten privaten Hosts jeweils genau eine entsprechende Adresse des Zugangs-Knotens des zweiten Kommunikationsnetzes eingetragen oder durch diesen bestimmbar.

Verschiedene Sicherheitseinrichtungen können bereitgestellt werden. So ermöglicht eine Sicherheitstabelle die Freigabe des Zugriffs zum Schutz der Daten vor unbefugtem Zugriff nur für registrierte externe Stationen. Das Zurücksenden einer Zurückweisungs-Nachricht zum externen Host, falls IP-Pakete beim Zugangs-Knoten empfangen werden, zu denen es keinen Datenbank- bzw. Tabelleneintrag gibt, stellt hingegen einen möglichst ressourcenschonenden Betrieb ohne vergebliche wiederholte Anfragen sicher.

Insbesondere ist auch eine Umsetzung auf paketorientierte Funk-Kommunikationssysteme oder Dienste von diesen möglich, so daß die Gefahr vermieden wird, daß der bestehende Adreßvorrat im bestehenden Internetadreßsystem nicht ausreicht.

Ein Ausführungsbeispiel wird nachfolgend anhand der Zeichnung näher erläutert. Es zeigen:
- Fig. 1: ein Beispiel einer bekannten klassenorientierten IPv4-Adressierung,
- Fig. 2: eine bekannte Belegung von Netznummern für verschiedene Klassen,
- Fig. 3: eine bekannte IP-Maskierung,
- Fig. 4: eine DNS-Namensauflösung,
- Fig. 5: einen umgekehrten Maskierungsmechanismus,
- Fig. 6: eine funktionelle Übersicht für eine umgekehrte Maskierung,
- Fig. 7: eine Zugangs-Knoten-Benachrichtigung,
- Fig. 8: ein Beispiel einer Zugangs-Knoten-Datenbank,
- Fig. 9: das Vorwärtsleiten von Paketen durch umgekehrtes Maskieren,
- Fig. 10: ein Beispiel einer erweiterten DNS-Namensserver-Datenbank für ein Netz 132.23.x.x und
- Fig. 11: ein Beispiel für eine umgekehrte Maskierung für eine Verbindungsaufnahme zu einem mobilen Host in einem zellularen Netz.

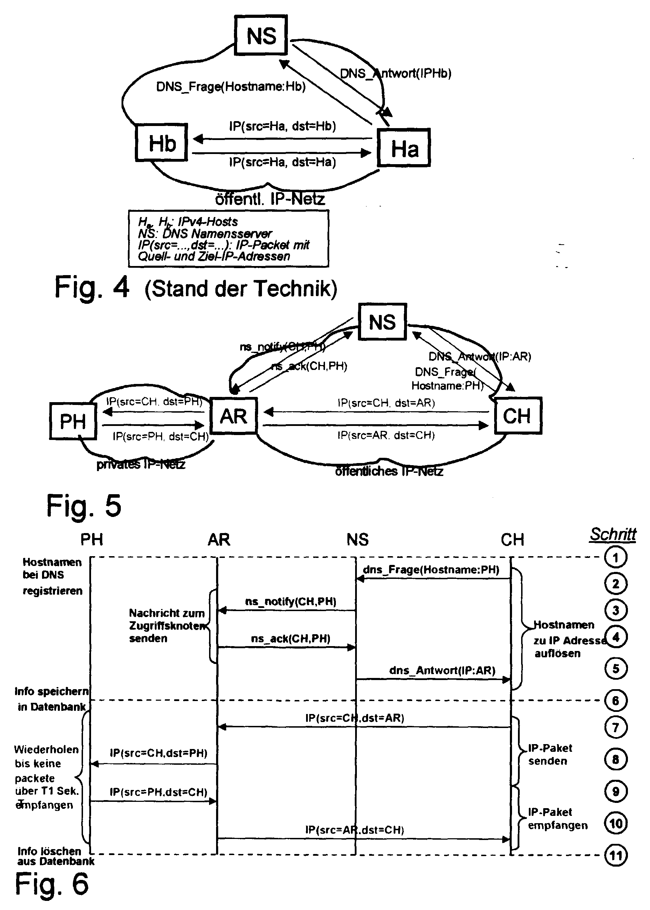

Anhand von Fig.4 wird die Festlegung eines Namens dargestellt. Für die menschliche Anwendung ist die Adressierung in IP-Netzen vereinfacht worden. Da Computer mit 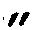 punktierten" Dezimaladressen, wie beispielsweise 10.1.2.3 arbeiten, Menschen jedoch alphabetische Namen, beispielsweise MeinHost.Domain.org besser handhaben können, wurde ein Verfahren für die Umwandlung von Hostnamen zu Hostadressen eingeführt. Diese Funktion wird als Domain-Name-Service (DNS) bezeichnet.

Falls ein Host Ha IP-Pakete zu einem anderen Host Hb senden möchte, fragt er den zuständigen DNS-Server bzw. DNS-Namensserver NS nach der geeigneten IP-Adresse für den gewünschten Hostnamen, wie dies in Fig.4 dargestellt ist. Dies kann jedesmal durchgeführt werden, wenn Hosts eine Verbindung einrichten möchten. Nach einer gewissen Zeit wird diese Information in der Regel gelöscht, so daß die Frage beim Einrichten einer neuen Verbindung wiederholt werden muß.

Aufgrund dieses Namens-Festlegungsverfahrens und aufgrund der Tatsache, daß Hosts Ha den Namen des Hosts Hb in eine IP-Adresse auflösen müssen, bevor sie IP-Pakete versenden können, besteht die Möglichkeit die Funktionalität eines DNS-Namensservers NS zu verbessern, um eine Nachricht zu dem Zugangs-Knoten AR, z.B. einem Zugangs-Router, zu senden, der für den gefragten lost Hb verantwortlich ist. Entsprechend wird auch die Funktionalität des Zugangs-Knotens AR verbessert, um ein umgekehrtes Maskierungsverfahren unterstützen zu können.

Das nachfolgend erörterte und in Fig. 5 dargestellte Ausführungsbeispiel ist für eine einzige Verbindung von einem korrespondierenden Host CH zu höchstens einem privaten Host PH pro Netz, insbesondere pro privatem IP-Netz möglich. Dies dient jedoch lediglich zur Vereinfachung des dargestellten Ausführungsbeispiels. Eine Erweiterung auf die Kommunikation zwischen einer Vielzahl von Hosts und korrespondierender Hosts ist durch entsprechende Übertragung der nachfolgend dargelegten Grundgedanken und Vergabe weiterer Namen möglich.

Ein Überblick für das Verfahren ist in Fig. 5 dargestellt. In einem ersten Schritt fragt ein korrespondierender Host CH, der außerhalb des privaten Netzes liegt, nach der IP-Adresse des privaten Hosts PH innerhalb des privaten Netzes durch das Anfragen beim Namensserver NS mit dem Hostnamen des privaten Hosts PH. Als Antwort erhält er die IP-Adresse des Zugangs-Knotens AR des privaten Hosts PH. Der Namensserver NS benachrichtigt den Zugangs-Knoten AR darüber, daß der korrespondierende Host CH nach dem privaten Host PH gefragt hat. Der korrespondierende Host CH sendet seine IP-Pakete zu der Adresse des Zugangs-Knotens AR und der Zugangs-Knoten AR weiß nun, daß diese Pakete für den privaten Host PH bestimmt sind. Nachfolgend tauscht der Zugangs-Knoten AR die IP-Pakete zwischen dem privaten und dem korrespondierenden Host PH, CH durch das Modifizieren der Quell- und Ziel-Adreßfelder (src_adresse bzw. dst_adresse) der IP-Pakete aus. Zwischen dem Zugangs-Knoten AR und dem Namensserver NS werden eine ns_Benachrichtigung(CH,PH) bzw. ns-notify(CH,PH) und eine ns_Bestätigung(CH,PH) bzw. ns_ack(CH,PH) ausgetauscht.

Die einzelnen Schritte werden anhand Fig. 6 näher erläutert. Insgesamt wird das Verfahren, das hier als umgekehrtes Maskieren bezeichnet wird, nachfolgend anhand von 11 Schritten beschrieben.

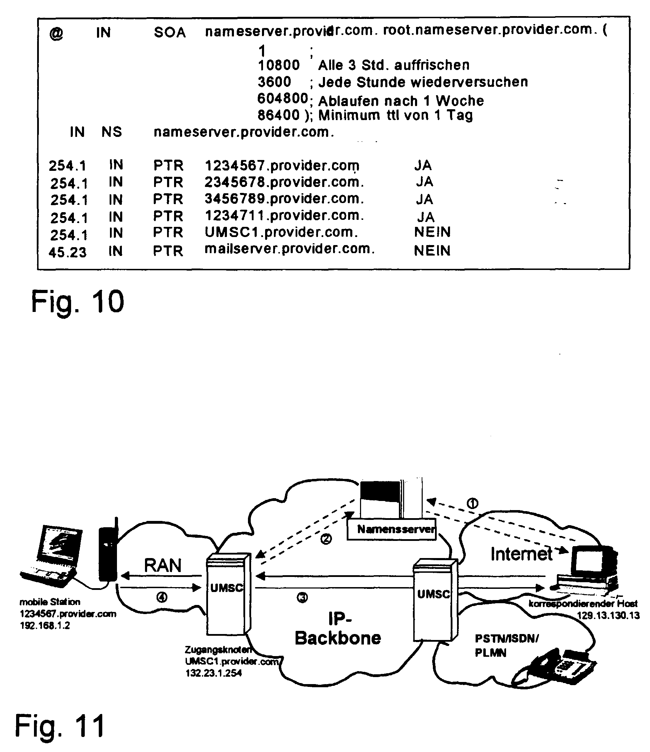

Schritt 1: Jeder Host PH in dem privatem Netz erhält einen einmaligen Hostnamen und eine einmalige IPv4-Adresse aus einem privaten IPv4-Adreßraum. Der Operator des privaten Netzes läßt die Hostnamen für alle zugreifbaren privaten Hosts PH in dem DNS-Namensserver NS registrieren. Für jeden Host PH wird der Hostname zusätzlich zu der IP-Adresse des Zugangs-Knotens AR in eine Tabelle Tab eingesetzt, so daß zu jeder Festlegung eines Hostnamens für einen privaten Host PH eine IP-Adresse des Zugangs-Knotens AR zugeordnet wird, die automatisch ausgegeben werden kann. Zusätzlich wird hinter jedem Hostnamen ein Eintrag hinzugefügt, um anzukündigen, falls eine Nachricht bzw. Benachrichtigung zu dem Zugangs-Knoten AR bei einer Hostnamen-Festlegung gesendet werden soll. Dieser Vorgang wird in Verbindung mit dem in Fig. 10 dargestellten Beispiel besser verständlich.

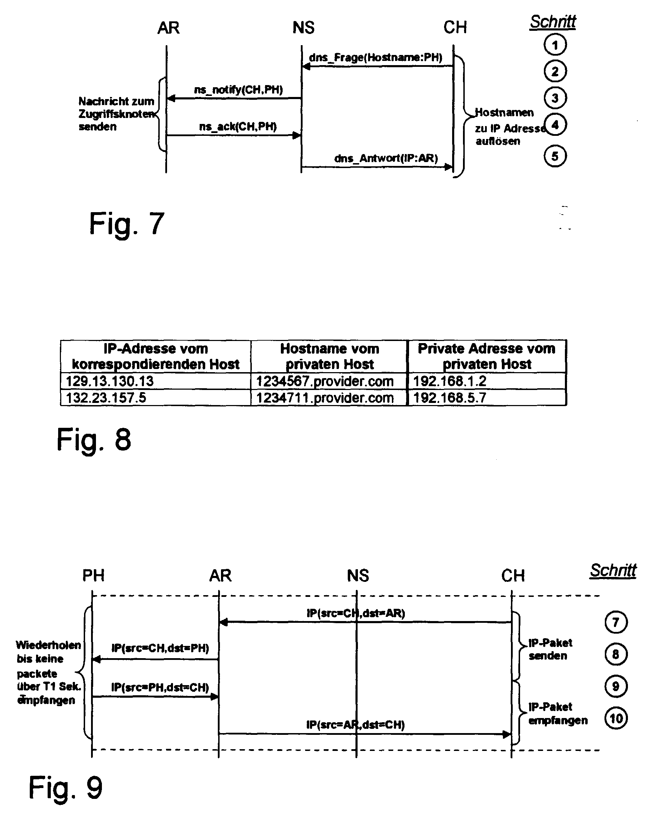

Schritt 2: Ein korrespondierender Host CH möchte IP-Pakete zu einem privaten Host PH senden und muß daher den dafür verantwortlichen Namensserver NS nach der IP-Adresse des privaten Hosts PH fragen. Dies wird durch das Aussenden einer DNS-Frage zum Namensserver NS durchgeführt, der den Hostnamen des privaten Hosts PH enthält, wie dies auch aus Fig. 7 mit Blick auf den Pfeil a ersichtlich ist.

Schritt 3: Nachdem ein korrespondierender externer Host CH eine Auflösungs- bzw. Festlegungsfrage (dns-Frage) gesendet hat, sendet der Namensserver NS eine Benachrichtigung zu dem Zugangs-Knoten AR (Fig. 7, Pfeil b). Diese Benachrichtigungsnachricht enthält die IP-Adresse des korrespondierenden externen Hosts CH und den Hostnamen des gefragten privaten Hosts PH.

Schritt 4: Der Zugangs-Knoten AR bestätigt den Empfang der Benachrichtigung (Fig. 7, Pfeil c). Falls der Namensserver NS die Bestätigung ns_ack nach einer gewissen Zeit nicht empfängt, wiederholt er die Benachrichtigung.

Schritt 5: Nach dem Empfang der Bestätigung antwortet der Namensserver NS auf die Auflösungsfrage durch das Senden einer DNS-Antwort, die die IP-Adresse des Zugangs-Knotens AR enthält (vergleiche Fig. 7, Pfeil d).

Schritt 6: Nach dem Empfang der Benachrichtigung speichert der Zugangs-Knoten AR diese Leit- bzw. Routing-Information in einer dafür bereitgestellten Datenbank für eine umgekehrte Maskierung. Ein beispielhafter Aufbau für eine solche Datenbank ist in Fig. 8 dargestellt, wobei in einer ersten Spalte die IP-Adresse des korrespondierenden Hosts CH, in einer zweiten Spalte der Hostname des privaten Hosts PH und in einer dritten Spalt die private Adresse des privaten Hosts PH abgespeichert werden.

Schritt 7: IP-Pakete, die von der Adresse des korrespondierenden Hosts CH aus hereinkommen, werden durch den Zugangs-Knoten AR entsprechend der Einträge in seiner Datenbank zum privaten Host PH weitergeleitet.

Schritt 8: Der Zugangs-Knoten AR leitet jedes hereinkommende IP-Paket zu der tatsächlichen IP-Adresse des privaten Hosts PH, wozu er das Zieladressenfeld dst des IP-Paketkopfes modifiziert (vergleiche Fig. 9, Pfeil b).

Schritt 9: IP-Pakete, die durch einen privaten Host PH zu einer öffentlichen IP-Adresse gesendet werden, werden stets über den Zugangs-Knoten AR geleitet (vergleiche Fig. 9, Pfeil c).

Schritt 10: Der Zugangs-Knoten AR modifiziert ein herausge_ hendes IP-Paket durch das Einsetzen seiner eigenen IP-Adresse in das Quelladreßfeld src des IP-Paket-Kopfteils (vergleiche Fig. 9, Pfeil d).

Schritt 11: Dieser Paketaustausch mit Hilfe einer umgekehrten Maskierung kann beliebig oft wiederholt werden. Falls über eine vorgebbare Dauer von T1 Sekunden keine weiteren IP-Pakete mehr empfangen werden, löscht der Zugangs-Knoten AR die Leit-Information vorzugsweise wieder aus seiner Datenbank.

Schritt 1, der die Registrierung privater Hostnamen PH beschreibt, ist bei dem beispielhaften Verfahren erforderlich, für sich genommen ist das Registrierungsverfahren jedoch bekannt.

Die Schritte 2 und 5, die die Namensfestlegung betreffen, sind ebenfalls standardisierte DNS-Festlegungsverfahren.

Besonders hervorzuheben sind die Schritte 3,4,6 und 7. Nach einer Namensfestlegung benachrichtigt der Namensserver NS den Zugangs-Knoten AR, welcher externe Host CH nach der IP-Adresse eines privaten Hosts PH im Zuständigkeitsbereich des Zugangs-Knotens AR des privaten Netzes gefragt hat. Dadurch weiß dieser Zugangs-Knoten AR, daß ein korrespondierender externer Host CH IP-Pakete zu einem privaten Host PH senden möchte, für den er zuständig ist. Aufgrund der durch den Namensserver NS empfangenen Benachrichtigungen weiß der Zugangs-Knoten AR, zu welchem privaten Host PH der korrespondierende Host CH IP-Pakete senden möchte.

Die Schritte 8-10, die das Paketweiterleiten betreffen, beruhen außer mit Blick auf die Funktion, wo der Zugangs-Knoten in seiner Datenbank nachsieht, um herauszufinden, zu welchem privaten Host das hereinkommende IP-Paket weiterzuleiten ist, dem üblichen IP-Maskierungsverfahren.

Schritt 11, der das Löschen des Datenbankeintrags betrifft, ist ein ebenfalls bislang nicht verwendeter Schritt. Das Zeitkriterium für die Auslaufzeit T1 wird vorteilhafterweise eingeführt, da der Zugangs-Knoten AR dadurch ein Kriterium zur Verfügung gestellt bekommt, welches der hereinkommenden IP-Pakete als das letzte zum Schließen der Sitzung anzusehen ist. Daher wird T1 vorzugsweise in Abhängigkeit von der Zeitbeschränkung bei der Hostnamen-Festlegung bestimmt. T1 wird vorzugsweise auf den gleichen Timeout bzw. Auslaufzeitwert gesetzt, wie der Auslaufzeitwert für die Festlegung des Hostnamen, die in der Datenbank für den Namensserver NS definiert ist (vergleiche beispielsweise Fig. 10).

Falls IP-Pakete von einem korrespondierenden Host CH empfangen werden, zu denen es keinen Datenbankeintrag gibt, sendet der Zugangs-Knoten AR eine Zurückweisungs-Nachricht zum korrespondierenden Host CH.

Bei privaten Netzen mit Einwähloptionen wird manchmal eine dynamische Adressierung für die Datenendstationen gewählt, das heißt jedesmal, wenn auf eine Datenendstation zugegriffen wird, kann diese eine unterschiedliche IP-Adresse erhalten. Jedoch kann das vorliegende Konzept auch im Falle einer solchen dynamischen Adressierung verwendet werden. In diesem Fall ist dann die Datenbank des Zugangs-Knotens AR mit der tatsächlichen momentan dynamischen IP-Adresse jedesmal zu aktualisieren, wenn sich ein Host in das private Netz einwählt und eine dynamische Adresse zugewiesen bekommt. Vorteilhafterweise ist das vorstehend aufgeführte Verfahren sehr einfach umsetzbar, da lediglich zwei bereits existierende Netzeinrichtungen hinsichtlich ihrer Funktionalität zu verbessern sind, nämlich der Zugangs-Knoten AR und der DNS-Namensserver NS. Mit dem vorstehenden Verfahren kann jeder Host CH in einer IP-Umgebung eine direkte Verbindung zu irgendeinem Host PH in einem fremden privaten Netz einrichten. Dazu muß er lediglich den Hostnamen des privaten Hosts PH wissen, der einmalig festgelegt wird und vorzugsweise über die Lebensdauer des privaten Hosts PH festgelegt bleibt.

Das vorliegende Konzept ist jedoch nicht nur bei der Kommunikation innerhalb eines paketorientierten Internets oder dergleichen anwendbar. Kommunikationsnetze, wie zukünftige zellulare Mobilfunknetze beruhen ebenfalls auf IP-Technologie oder ermöglichen deren Anwendung. Da diese Technologie durch Datenendgeräte bzw. im Falle von Funk-Kommunikationssystemen Mobilstationen verwendbar ist, die über IP-Adressen adressierbar sind, benötigt jede Datenendstation eine IP-Adresse, solange eine Verbindung besteht.

Mit IPv4 ist es jedoch beim derzeitigen Aufbau nicht möglich, eine öffentliche IP-Adresse für jede von mehreren Millionen Datenendstationen bzw. Mobilstationen zuzuweisen. Daher gewinnt die private IP-Adressierung bei der Erörterung der Adressierung in zellularen Netzen bzw. Funk-Kommunikationssystemen zunehmend an Bedeutung und wird wahrscheinlich verwendet werden, wie dies bei dem 44-ten IETF-Treffen mit Blick auf das Mobile-IP-Meeting-Protokoll erörtert wurde. Da es möglich ist, einen einmaligen Hostnamen für jede Datenendstation zuzuordnen, Z.B. 〈Telefonnummer〉.〈Providername〉.com mit 〈Telefonnummer〉 als Name des privaten Hosts PH und 〈Providername〉 als Name des privaten Netzes, kann das vorstehend beschriebene Verfahren für direkte Zugriffe auf Mobilstationen bzw. mobile Datenendstationen in irgendeinem IP-Netz verwendet werden, ist somit also auch für zellulare Netze bzw. die geplanten Mobilfunk-Kommunikationsnetze standardisierbar.

Ein zellulares mobiles Netz, das auf IP-Technologie beruht, besteht in der Regel aus mehreren Funkzugriffsnetzen bzw. Radio-Access-Networks (RANs), einem IP-Kernnetz, Gateways und Zugangs-Knoten AR, die nachfolgend als UMSC bezeichnet werden, einigen Arten von Authentifikations- und Berechnungseinheiten und einem DNS-Namensserver NS. Der Namensserver NS wird wie vorstehend beschrieben angepaßt, und der modifizierte Zugangs-Knoten AR sitzt in einem UMSC.

Eine Mobilstation greift über das Funknetz RAN auf deren zellulares mobiles Netz zu. Das Netz belegt eine IP-Adresse für die Datenendstation bzw. Mobilstation, wobei die Adresse statisch oder dynamisch vergeben werden kann. Falls die Adresse dynamisch vergeben wird, ist die Leit-Datenbank innerhalb des Zugangs-Knotens bzw. UMSC entsprechend zu aktualisieren.

Beispielsweise werde als Hostname des privaten Hosts 1234567.provider.com und dessen statische IP-Adresse 192.168.1.2 aus dem privaten IPv4-Adressraum verwendet. Die öffentliche IP-Adresse des UMSCs soll 132.23.1.254 sein. Beim Einrichten des Netzes addiert der zellulare Operator die Hostnamen von seinen mobilen Hosts in seine Namensserver-Datenbank und fügt nach jedem Rost einen Eintrag hinzu, um festzulegen, ob eine Anfrage zur Adreßauflösung des jeweiligen Eintrages dem UMSC bekannt gegeben werden soll (Ja/Nein). Fig. 10 gibt ein Beispiel einer verbesserten DNS-Namensserver-Datenbank für das Netz 132.23.x.x an

Zur Sicherstellung der Datensicherheit von beispielsweise einem Intranet kann in jedem für dieses Verfahren geeigneten Router eine Tabelle bereitgestellt werden, in der alle externen Hosts eingetragen sind, die eine Verbindung zu einem Host innerhalb des vom Zugangs-Knoten kontrollierten Netzes aufbauen dürfen.

Beim nachfolgenden Beispiel möchte ein korrespondierender externer Host mit der öffentlichen IP-Adresse 129.13.130.13 IP-Pakete zu dem mobilen Host MH senden. Der beispielhafte Ablauf wird anhand der Fig. 11 verdeutlicht und erfolgt mit den Schritten:
1. Der Internet-Host CH mit der festen öffentlichen IP-Adresse 129.13.130.13 möchte mit einem mobilen Host MH bzw. einer Mobilstation in Verbindung treten. Er kennt lediglich deren Hostnamen (hier 1234567.Provider.com), so daß er den zugehörigen Namensserver NS nach der Adreßfestlegung zu fragen hat. Der Namensserver NS sendet ihm die IP-Adresse des Zugangs-Knotens AR (bzw. UMSC) 132.23.1.254, der für den mobilen Host MH verantwortlich ist.
2. Der Namensserver NS teilt dem UMSC zum Eintragen in eine entsprechende Tabelle mit, daß ein externer Host CH die aufgelöste Adresse eines Hosts MH innerhalb der Domain des UMSCs abgefragt und mitgeteilt bekommen hat, was bedeutet, daß in der nächsten Zeit Pakete für diesen mobilen Host MH übermittelt werden. Die Benachrichtigung kann beispielsweise in Form einer Nachricht ns_notify (129.13.130.13, 1234567.provider.com) erfolgen. Der Zugangs-Knoten AR speichert diese Information in seiner Leit-Datenbank entsprechend dem in Fig. 8 dargestellten Beispiel.
3. Der korrespondierende Host sendet dann seine IP-Pakete zu der Zieladresse des UMSC, das heißt die gesendeten IP-Paket-Köpfe umfassen die Angabe src_adresse=129.13.130.13, dst_adresse=132.23.1.254.
4. Der UMSC erkennt die Quelladresse der hereinkommenden Pakete als die Adresse des korrespondierenden Hast und sucht in seiner Leit-Datenbank nach dem privaten Host, zu dem die Pakete weiterzuleiten sind. Beim Weiterleiten der hereinkommenden Pakete ändert er den IP-Kopf scr_adresse=129.13.130.13, dst_adresse=132.23.1.254 zu scr_adresse=129.13.130.13, dst_adresse= 192.168.1.2 entsprechend dem vorstehenden Schritt 8. Der mobile Host bzw. die Mobilstation beantwortet die IP-Pakete in einer normalen Art und Weise durch das Einsetzen der Adresse des korrespondierenden Hast als eine Zieladresse und seiner eigenen Adresse als Quelladresse. Beim Weiterleiten dieser Pakete modifiziert der UMSC die Quelladresse durch das Einsetzen seiner eigenen Adresse, so daß der Kopf der ausgehenden IP-Pakete bei diesem Beispiel die folgende Form annimmt: src_adresse=132.23.1.254, dst_adresse= 129.13.130.13.

Nachdem der UMSC über eine Zeit T1, beispielsweise 10800 Sekunden, von der Adresse 129.13.130.13 keine Pakete empfangen hat, löscht er den Leit-Tabelleneintrag 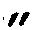 129.13.130.13 → 192.168.1.2".

## Patentansprüche

1. Verfahren zum Verbinden von Einrichtungen (CH) eines ersten und eines zweiten paketorientierten Kommunikationsnetzes, wobei die Kommunikationsnetze über zumindest eine Schnittstelle (AR) miteinander verbunden sind,
dadurch gekennzeichnet, daß
eine verbindungssuchende Einrichtung (CH) des ersten Kommunikationsnetzes eine Verbindung zu einer internen Einrichtung (PH; MH) des zweiten Kommunikationsnetzes aufbaut.

2. Verfahren nach Anspruch 1, bei dem
die zu verbindenden Einrichtungen stationäre Hosts (CH, PH) und/oder mobile Hosts (MH) verschiedener Kommunikationsnetze sind.

3. Verfahren nach Anspruch 1 oder 2, bei dem
die Kommunikationsnetze gemäß einem IP-Protokoll gesteuert werden.

4. Verfahren nach einem vorstehenden Anspruch, bei dem
die zumindest eine Schnittstelle (AR) ein Zugangs-Knoten des zweiten Kommunikationsnetzes ist, über den die interne Einrichtung (PH; MH) angefordert wird.

5. Verfahren nach einem vorstehenden Anspruch, bei dem
eine interne Adresse des zweiten Kommunikationsnetzes bei dessen Schnittstelle (AR) unter zusätzlicher Angabe der Adresse der verbindungssuchenden Einrichtung (CH) des ersten Kommunikationsnetzes angemeldet wird (Schritt 3).

6. Verfahren nach Anspruch 5, bei dem
die Adresse der verbindungssuchenden Einrichtungen (CH) des ersten Kommunikationsnetzes in Bezug auf die angemeldete interne Adresse der internen Einrichtung (PH; MH) des zweiten Kommunikationsnetzes zumindest zeitweilig hinterlegt wird.

7. Verfahren nach Anspruch 5 oder 6, bei dem
die Adresse der verbindungssuchenden Einrichtung (CH) des ersten Kommunikationsnetzes zusammen mit der angemeldeten internen Adresse der internen Einrichtung (PH; MH) des zweiten Kommunikationsnetzes in einer Zuordnungs-Tabelle (Tab), die insbesondere in der Schnittstelle (AR) angeordnet ist, hinterlegt wird (Schritt 6).

8. Verfahren nach einem der Ansprüche 5 bis 7, bei dem
die Anmeldung oder Hinterlegung der Adressen bis zu einer Bestätigung durch die Schnittstelle (AR) wiederholt (Schritt 4) und/oder nach einer voreinstellbaren Zeit (T1) ohne Aktivitäten zwischen den Einrichtungen (CH, PH; CH, MH) gelöscht wird (Schritt 11).

9. Verfahren nach einem vorstehenden Anspruch, bei dem
beim Eintreffen einer Information von der verbindungssuchenden Einrichtung (CH) aus dem ersten Kommunikationsnetz durch insbesondere die Schnittstelle (AR) des zweiten Kommunikationsnetzes die Zieladresse der Schnittstelle (AR) gegen die Zieladresse der internen Einrichtung (PH; MH) im zweiten Kommunikationsnetz ausgetauscht wird (Schritt 8).

10. Verfahren nach einem vorstehenden Anspruch, bei dem
nach dem Eintreffen einer Information von der verbindungssuchenden Einrichtung (CH) aus dem ersten Kommunikationsnetz bei der internen Einrichtung (PH; MH) im zweiten Kommunikationsnetz von dieser eine Bestätigung zurückgesendet wird, wobei insbesondere durch die Schnittstelle (AR) des zweiten Kommunikationsnetzes die Absenderadresse der internen Einrichtung (PH; MH) im zweiten Kommunikationsnetz gegen die Absenderadresse der Schnittstelle (AR) ausgetauscht wird (Schritt 10).

11. Verfahren nach einem vorstehenden Anspruch, bei dem
die verbindungssuchende Einrichtung (CH) im ersten Kommunikationsnetz vor dem Verbindungsaufbau zu einer internen Einrichtung (PH; MH) im zweiten Kommunikationsnetz bei einem Namensserver (NS) nach der Adresse der Schnittstelle (AR) des zweiten Kommunikationsnetzes fragt (Schritt 2).

12. Verfahren nach Anspruch 11, bei dem
in dem Namensserver (NS) zu bekannten internen Adressen des zweiten Kommunikationsnetzes jeweils zumindest eine entsprechende Adresse des zweiten Kommunikationsnetzes, insbesondere eine Schnittstellenadresse von diesem, eingetragen wird oder durch diesen bestimmbar ist (Schritt 1).

13. Verfahren nach Anspruch 11 oder 12, bei dem
der Namensserver (NS) zum zweiten Kommunikationsnetz gehört und/oder vom zweiten Kommunikationsnetz aus mit ausgewählten internen Adressen von diesem belegbar ist.

14. Verfahren nach einem vorstehenden Anspruch, bei dem
der Verbindungsaufbau von der verbindungssuchenden Einrichtung (CH) im ersten Kommunikationsnetz zu der internen Einrichtung (PH; MH) im zweiten Kommunikationsnetz einem umgekehrten Maskierungsverfahren entspricht.

15. Verfahren nach einem vorstehenden Anspruch, bei dem
zumindest jede von außerhalb ansprechbare interne Einrichtung (PH; MH) des zweiten Kommunikationsnetzes eine eigene und einmalige Adresse erhält, wobei die Adressen insbesondere aus einem privaten IP-Adreßraum ausgewählt werden.

16. Verfahren nach einem vorstehenden Anspruch, bei dem
bei einer externen Anfrage durch die verbindungssuchende Einrichtung (CH) aus dem ersten Kommunikationsnetz in einer Sicherheitstabelle nachgeschlagen wird, ob die verbindungssuchende externe Einrichtung (CH) zum Zugriff berechtigt ist.

17. Verfahren nach einem vorstehenden Anspruch, bei dem
die Schnittstelle (AR) eine Zurückweisungs-Nachricht zur verbindungssuchenden Einrichtung (CH) im ersten Kommunikationsnetz übermittelt, falls IP-Pakete von dieser empfangen werden, zu denen es keinen Datenbankeintrag gibt.

18. Kommunikationssystem, insbesondere Funk-Kommunikationssystem, zum Ausführen eines Verfahrens nach einem der vorstehenden Ansprüche mit
- zumindest zwei paketorientierten Kommunikationsnetzen, die jeweils zumindest eine kommunikationsfähige Einrichtung (CH bzw. PH; MH) aufweisen, und
- zumindest einer Schnittstelle (AR), welche die Kommunikationsnetze miteinander verbindet.

19. Kommunikationssystem nach Anspruch 18, bei dem
ein Kommunikationssystem als Subnetz ausgebildet ist.

20. Kommunikationssystem nach Anspruch 18 oder 19, mit einer Schnittstelle, insbesondere einem Zugangs-Knoten (AR), mit einer Tabelle zum zugeordneten und zeitweiligen oder dauerhaften Eintragen einer Adresse von einer verbindungssuchenden Einrichtung (CH) eines ersten Kommunikationsnetzes und einer von dieser gerufenen internen Adresse von einer Einrichtung (PH; MH) eines zweiten Kommunikationsnetzes.

21. Kommunikationssystem nach einem der Ansprüche 18 bis 20, mit einem Namensserver (NS), in dem Informationen über interne Einrichtungen (PH; MH) eines zweiten Kommunikationssystems, insbesondere intern einmalig vergebene Adressen, registriert sind.

22. Kommunikationssystem nach einem der Ansprüche 18 bis 20, bei dem interne Einrichtungen (PH; MH) stationäre und/oder mobile Datenendstationen, insbesondere Hosts (MH), und/oder mobile Funkstationen sind.
